# FASCICULE DE BREVET EUROPEEN

(11) **EP 1 027 920 B1**
(45) Date de publication et mention de la délivrance du brevet: **12.11.2003**
(21) Numéro de dépôt: 00400371.1
(22) Date de dépôt: 09.02.2000
(51) Int. Cl.: B01F 15/00

(54) **Dispositif de fixation d'une grille pour batteur**
Befestigungsanordnung eines Gitters für eine Mischvorrichtung
Fastening arrangement of a grid for a mixer

(30) Priorité: 10.02.1999 FR 9901563
(43) Date de publication de la demande: 16.08.2000
(73) Titulaire: VMI, 85600 Montaigu (FR)
(72) Inventeur: Vannier, Guillaume, 44000 Nantes (FR); Fisson, Gérard, 85600 Saint Hilaire de Loulay (FR)
(74) Mandataire: Keib, Gérard

(56) Documents cités:
- WO-A-93/19606
- DE-C- 160 333
- FR-A- 2 741 121
- GB-A- 2 255 608

## Description

L'invention concerne un dispositif de fixation d'une grille de protection amovible à un organe support d'un batteur-mélangeur, et un procédé de fixation de la grille à l'organe support.

On connaît déjà des systèmes de fixation d'une grille de protection sur le bâti d'une machine tel qu'un mélangeur, utilisant des moyens de fixation à baïonnettes.

Le document FR-A-2 741 121 décrit un écran mobile entre une première position angulaire de montage et de démontage de l'écran, et une seconde position angulaire d'activation de moyens d'autorisation de mise en service de la machine.

Le document FR-A-2 740 064 décrit un écran tronconique comprenant une partie arrière pleine fixe et une partie avant constituée par une grille montée pivotante sur une couronne solidaire de bâti.

Ces dispositifs à baïonnettes peuvent entraîner des difficultés de montage et de démontage par un même utilisateur pour à la fois soutenir la grille et exercer une action sur un verrou pour dégager la grille. De plus de tels dispositifs peuvent poser des problèmes d'hygiène liés à l'encombrement des baïonnettes par des particules. En outre, de tels dispositifs ne sont pas toujours adaptés pour des volumes de cuve manipulée élevés par exemple de l'ordre de 50 litres.

On connaît également des dispositif de fixation et de déplacement d'une grille de protection faisant intervenir un déplacement vertical de la grille à l'aide de moyens formant levier, par exemple décrits dans les documents FR-A-2 647 030 et EP-A-650 008.

De tels dispositifs ne permettent pas une rotation de la grille par rapport à la cuve de mélange jusqu'à une position où un utilisateur peut avoir accès à la cuve.

On connaît par ailleurs des dispositifs de fixation d'une grille faisant intervenir des moyens de blocage de type plots d'ancrage présentant une rainure de section rectangulaire, aptes à accueillir la couronne de la grille, la rotation de la grille étant possible par coulissement de la couronne dans les rainures.

De tels dispositifs, décrits par exemple dans le document WO 93/19606 peuvent poser des problèmes notamment de résistance mécanique des plots d'ancrage.

L'invention à pour objet de palier les inconvénients de l'art antérieur, et de proposer un dispositif de fixation d'une grille permettant un montage, un démontage et un nettoyage faciles.

A cet effet l'invention à pour objet un dispositif de fixation tel que décrit dans la revendication 1.

L'organe support est incorporé dans le bâti ou monté sur le bâti.

Selon une variante la partie extrême supérieure de la grille est de forme annulaire.

Les galets guident en rotation la grille par rapport à l'organe support fixe entre une position de fermeture et une position d'ouverture respectivement interdisant et autorisant l'accès à l'intérieur de la cuve.

Selon une autre variante la partie extrême supérieure de la grille forme un cadre parallélipipédique.

Les galets et la partie extrême supérieure de la grille restent solidaires respectivement de l'organe support et de la grille lors du montage et du démontage de la grille.

Les galets sont d'une part deux galets fixes par rapport à l'organe support et d'autre part au moins un galet mobile par rapport à l'organe support, le déplacement du ou des galets mobiles permettant l'engagement de la partie annulaire supérieure avec les galets fixes et le ou les galets mobiles jusqu'à une position de maintien de la grille par les galets fixes et mobiles

Selon une variante, les galets fixes sont placés du côté arrière de l'organe support et le ou les galets mobiles sont placés du côté avant de l'organe support

Selon une autre variante, les galets fixes sont placés du côté avant de l'organe support et le ou les galets mobiles sont placés du côté arrière de l'organe support

Les galets d'attache sont supportés par l'organe support, et régulièrement espacés circonférentiellement

Les galets fixes ou mobiles sont espacés circonférentiellement de 90° dans le cas de deux galets mobiles

Les galets fixes ou mobiles sont espacés circonférentiellement de 120° dans le cas d'un galet mobile

Chaque galet mobile est mobile entre une position écartée de la partie extrême supérieure de la grille, correspondant à la sollicitation du galet mobile par la partie extrême supérieure de la grille lors du montage, et une position engagée dans laquelle la grille est montée sur et contrainte par les galets fixes et le ou les galets mobiles

Selon une variante, le ou les galets mobiles sont mobiles en translation, se déplaçant chacun dans un orifice oblong de l'organe support aligné avec le galet et situé du côté avant

Le dispositif de fixation comprend un dispositif de sécurité comportant des moyens de sécurité, le ou les galets mobiles étant mobiles dans le ou les trous oblongs d'une position de repos sécurité enclenchée, à une position de montage sécurité enclenchée, puis à une position intermédiaire de fonctionnement sécurité désenclenchée

Le dispositif de sécurité comprend deux plots ménageant une gorge et un boîtier supportant un ergot positionné dans la gorge en position intermédiaire de fonctionnement sécurité désenclenchée.

Selon une autre variante, les galets mobiles sont mobiles en rotation, selon un angle compris sensiblement entre 0 et 45°par rapport à la verticale

Chaque galet comprend une deuxième partie extrême inférieure médiane cylindrique formant un berceau de réception de la partie annulaire supérieure venant en contact avec ledit galet lors du montage de la grille

Les galets comprennent entre la plaque support et la première partie médiane une deuxième partie extrême de plus fort encombrement transversal que la première partie médiane attenante, et sous la première partie médiane une troisième partie extrême de plus fort encombrement transversal que la première partie médiane attenante

La troisième partie extrême a une forme générale conique ou tronconique dont la grande base est vers la première partie axiale médiane et la petite base ou la pointe est vers l'extrémité libre du galet, de façon à faciliter le guidage de la partie supérieure annulaire vers la première partie médiane des galets lors du montage de la grille

L'organe support est une plaque horizontale, traversée par l'arbre moteur vertical du batteur, présentant une surface inférieure tournée vers la cuve, une surface supérieure tournée du côté opposé, un côté arrière tourné vers la partie fixe verticale du bâti et un côté avant tourné du côté opposé

L'organe support présente pour chaque galet mobile des moyens de rappel du galet mobile incorporés dans un boîtier fixé à la face supérieure de l'organe support, permettant au galet mobile de revenir en position de repos ou en position intermédiaire après en avoir été écarté lors de l'engagement ou du dégagement de la partie annulaire avec le galet mobile.

Selon une variante, les moyens de rappel de chaque galet mobile sont sous la forme d'un ressort de rappel guidé en translation pour chaque galet mobile, le ressort étant relié à un support de palier horizontal coulissant coopérant avec un palier coulissant vertical associé au galet.

Selon une autre variante, les moyens de rappel de chaque galet mobile sont sous la forme d'un ressort de rappel guidé en translation commun aux deux galets mobiles dans un seul orifice oblong, les deux galets mobiles étant reliés par une barre reliée au ressort de rappel.

Selon une autre variante, les moyens de rappel de chaque galet mobile sont un vérin de rappel.

Dans une réalisation, les galets fixes et mobiles viennent en contact avec la face interne de la partie supérieure annulaire.

Dans une autre réalisation les galets viennent en contact avec la face externe de la partie supérieure annulaire.

La grille comprend une partie de protection filaire s'étendant sur 200 à 300° et typiquement 270°, et une partie formant ouverture orientée vers l'arrière en position normale de fonctionnement.

La grille comprend deux poignées situées du côté avant et placées à proximité du ou des galets mobiles lors du montage et du démontage de la grille, de façon à permettre simultanément le déplacement du ou des galets mobiles dégageant le ou les galets mobiles de la partie annulaire et le positionnement de la grille pour le montage et le démontage.

La partie de protection comporte d'une seule pièce une première portion inférieure en forme de bol renversé et une seconde partie supérieure sensiblement cylindrique.

Selon un second aspect, l'invention a pour objet un appareil comprenant un bâti comportant un organe support, une grille, et un dispositif de fixation tel que décrit dans la revendication 31.

Selon un troisième aspect, l'invention a pour objet un procédé de montage d'une grille tel que décrit dans la revendication 32.

Selon un quatrième aspect l'invention a pour objet un procédé de démontage d'une grille tel que décrit dans la revendication 33.

D'autres objets et avantages de l'invention apparaîtront au cours de la description, description qui va être faite en référence aux dessins annexés illustrant un mode de réalisation, dessins dans lesquels :
- la figure 1 est une vue de côté d'un mélangeur comprenant une grille et un dispositif de fixation de la grille selon l'invention, la grille étant en position de montage au dessus de la cuve ;

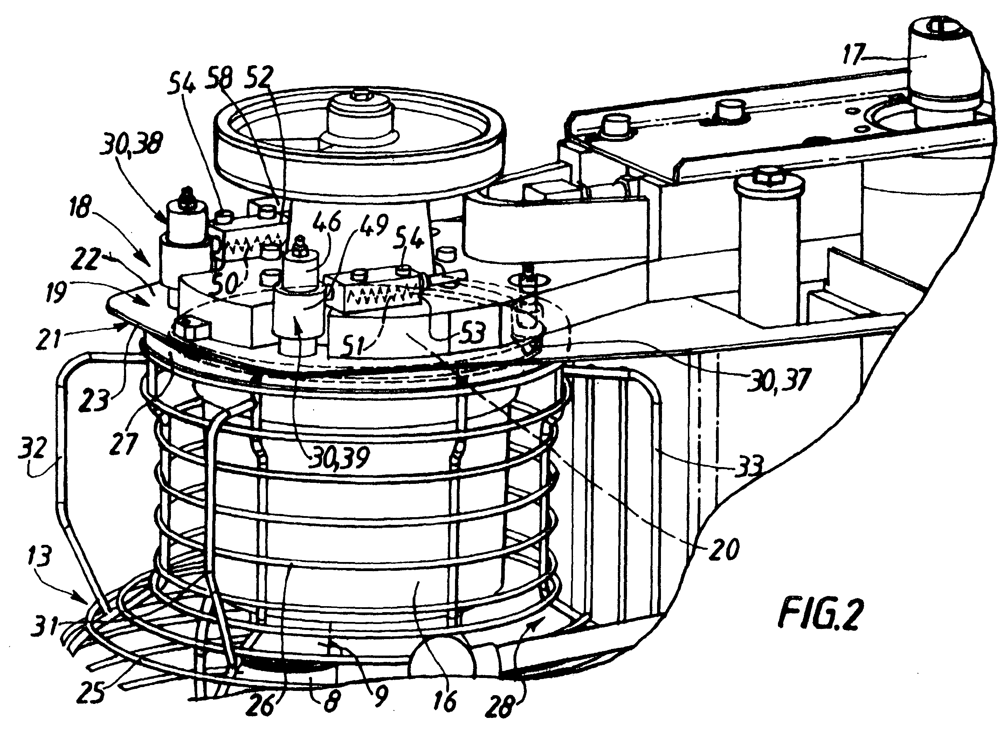

- la figure 2 est une vue partielle en perspective en agrandissement du dispositif de fixation de la grille à l'organe support ;

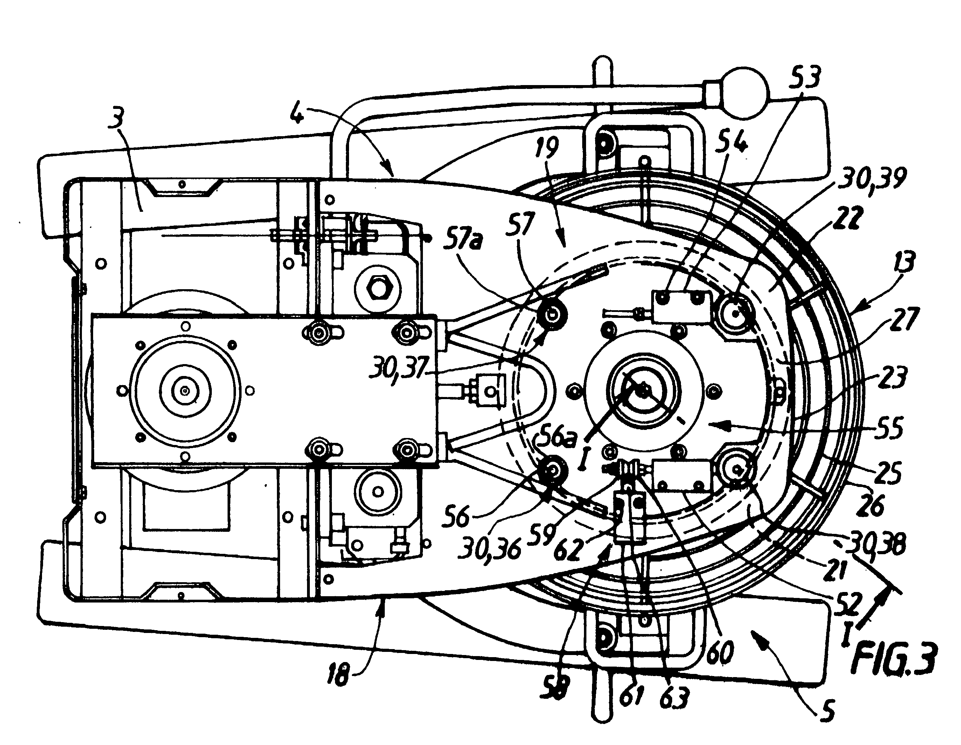

- la figure 3 est une vue de dessus du dispositif de fixation, en position de montage ;

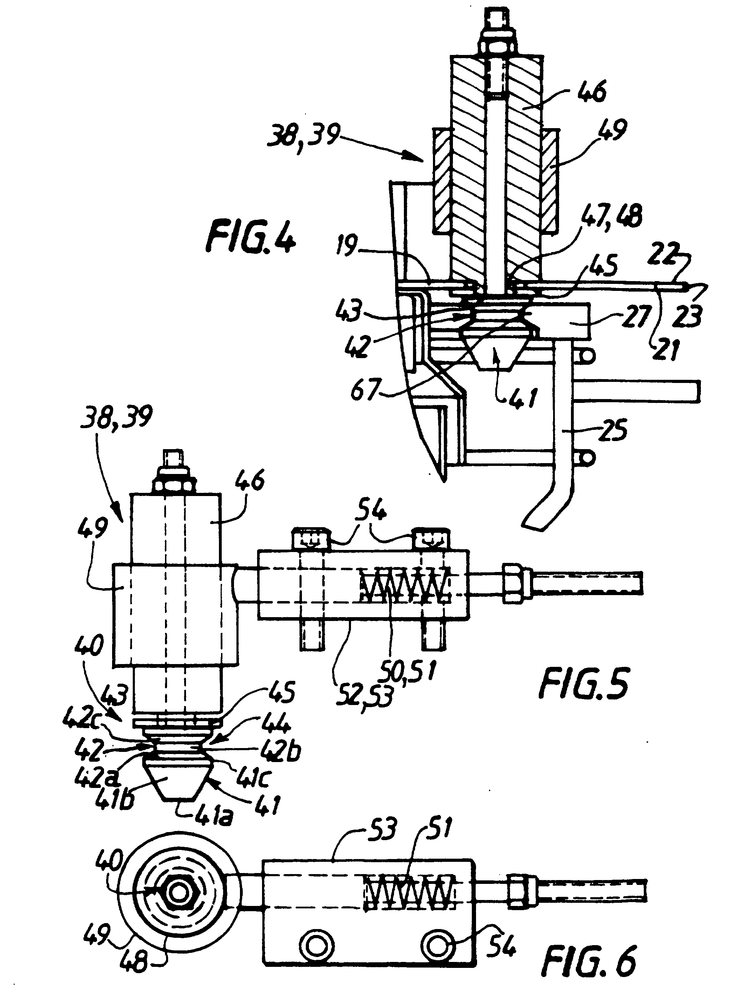

- la figure 4 est une vue partielle en coupe selon la ligne I-I et en agrandissement des galets de fixation de la grille, la grille étant en position de montage ;
- la figure 5 est une vue de côté d'un galet mobile et du dispositif de rappel du galet mobile;
- la figure 6 est une vue de dessus d'un galet mobile et du dispositif de rappel;
- la figure 7 est une vue de côté illustrant le démontage de la grille par un utilisateur selon un mode de réalisation de l'invention ;

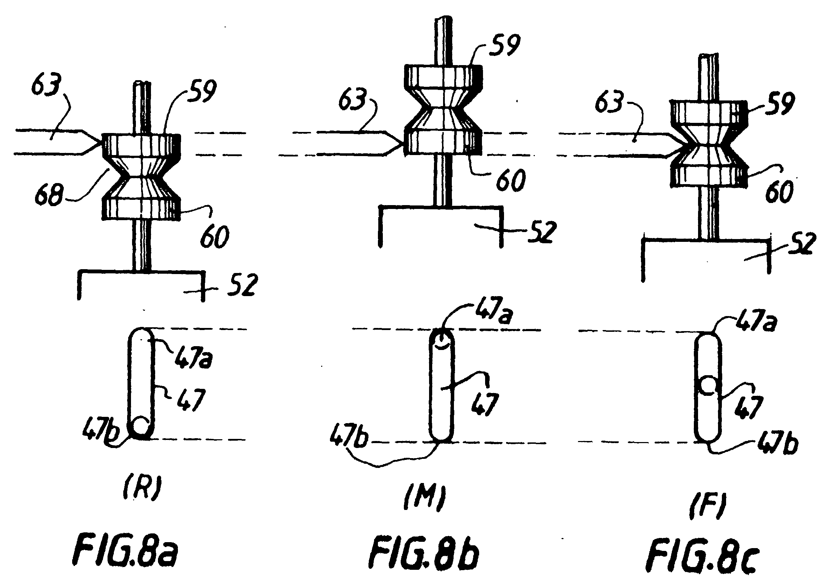

- les figures 8a, 8b et 8c illustrent le fonctionnement du dispositif de sécurité.

Le dispositif de fixation selon l'invention est destiné à un appareil tel qu'un mélangeur ou un batteur, notamment pour l'industrie agro-alimentaire, par exemple dans le domaine de la boulangerie/confiserie, permettant de traiter différentes pâtes alimentaires et d'obtenir un mélange optimal des constituants.

Le volume de produits traité peut être élevé grâce au dispositif décrit par la suite, par exemple de l'ordre de 50 litres.

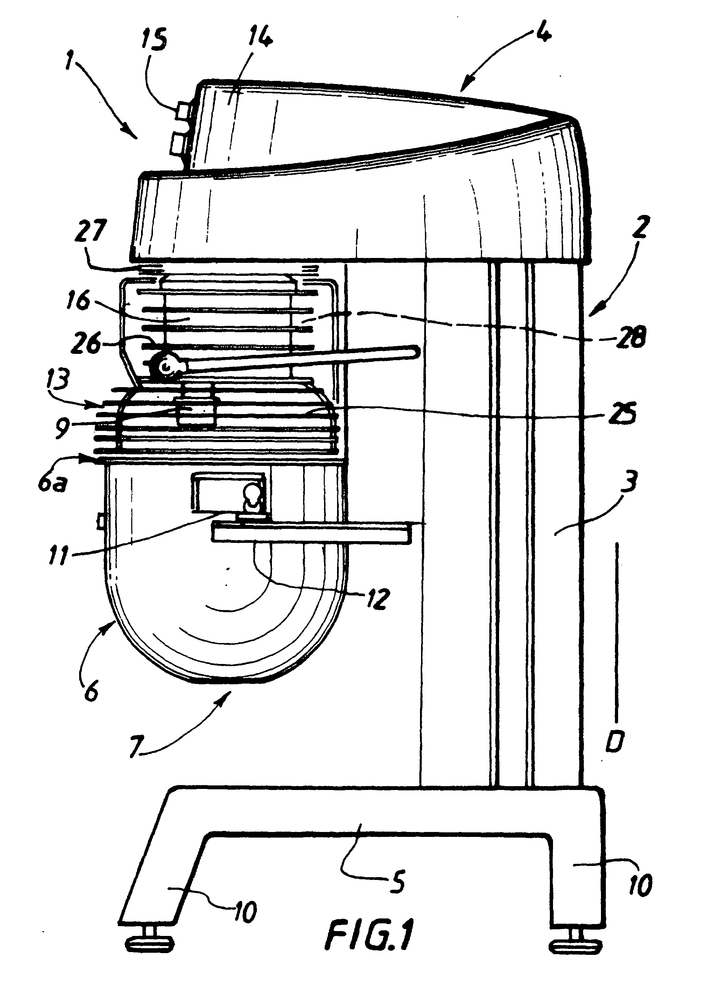

Les qualificatifs de haut et bas, supérieur et inférieur, correspondent à un appareil posé verticalement sur un support, les pieds de support en bas, tel que représenté en figure 1.

Le mélangeur 1 comprend un bâti 2 comportant un corps vertical 3, une partie supérieure transversale 4, une partie inférieure transversale 5.

Par la suite, on situe la position des différents éléments de l'appareil en référence au corps vertical 3 du bâti 2.

Le corps vertical 3 s'étend selon une direction D verticale et est situé en position arrière de l'appareil.

Une cuve 6 est placée en position avant de l'appareil. Le côté gauche de l'appareil correspond à la partie gauche vue par un utilisateur placé du côté avant et regardant de face le corps vertical 3 du bâti 2.

Entre la partie supérieure transversale 4 et la partie inférieure transversale 5 existe un espace 7, destiné à recevoir la cuve 6 ouverte à sa partie supérieure.

La cuve 6 contient les éléments à mélanger à l'aide d'outils de mélange 8 appropriés. Les outils de mélange 8 sont entraînés en rotation par un arbre moteur 9 sensiblement vertical monté sur la partie transversale supérieure du bâti.

La partie supérieure transversale 4 est par exemple de forme sensiblement parallélipipédique. La partie inférieure transversale 5 comprend par exemple quatre pieds de stabilisation espacés 10.

La cuve 6 est par exemple de révolution et est fixée à gauche et à droite sous ses poignées 11 de façon amovible à des organes de maintien 12, s'étendant transversalement au corps vertical 3, permettant notamment le réglage en hauteur de la cuve 6 entre la partie supérieure transversale 4 et la partie inférieure transversale 5, jusqu'à la hauteur souhaitée lors de l'utilisation de l'appareil.

L'appareil comprend en outre une grille de protection 13 amovible destinée à être fixée à la partie supérieure transversale 4, par le dessous, et à être placée entre la partie transversale supérieure 4 et le bord supérieur de la cuve 6. Cette grille 13 a notamment pour fonction d'empêcher un accès non souhaité à l'intérieur à la cuve 6 lorsque l'appareil est en train de fonctionner.

La partie supérieure transversale 4 du bâti 2 présente :
- un capot 14 formant carter pour les organes de commande de l'arbre 9, notamment la motorisation, la transmission par courroie ou équivalent. En face avant du capot 14 se trouvent les moyens de commande manuelle 15 du fonctionnement de l'appareil,
- un arbre moteur entraîné en rotation 9 sur lequel sont fixés les outils de mélange 8,
- un organe support 18 sous la forme d'une plaque support horizontale 19 comprenant un orifice circulaire 20 pour le passage de l'arbre moteur 9 à travers cette plaque support 19, la grille de protection 13 est fixée sur la plaque support 19, du côté avant de l'appareil.
- un carter rotatif 16 formant manchon autour de l'arbre moteur 9 et s'étendant verticalement, faisant saillie de l'organe support, vers le bas.

La plaque support 19 comprend une face inférieure 21 toumée vers la cuve 6, et une face supérieure 22 tournée du côté opposé à l'espace 7 et la cuve 6, vers le capot 14 de l'appareil, un bord avant 23 du côté avant et un bord arrière 24 du côté arrière.

La grille 13 est filaire et comprend en formant une seule pièce, du bas vers le haut en position de montage, une première partie inférieure 25 en forme de bol renversé tourné vers la cuve 6, et une seconde partie supérieure 26 sensiblement cylindrique terminée par une partie annulaire supérieure 27 en forme de couronne.

Dans cette réalisation, le carter rotatif 16, la cuve 6 et la grille 13 sont coaxiaux et l'arbre moteur 9 est excentré. L'arbre moteur 9 peut aussi être coaxial.

La grille 13 s'étend angulairement sur 270°. La grille 13 est donc ouverte sur 90° présentant une ouverture angulaire 28.

Le diamètre de la seconde partie inférieure 26 est sensiblement égal au diamètre du bord supérieur 6a de la cuve 6 et ainsi apte à recouvrir la cuve 6, sauf sur son ouverture angulaire 28.

La partie supérieure annulaire 27 en forme de couronne plane s'étend sur 360°.

La grille 13 est apte à pivoter entre une position dite de fermeture et une position dite d'ouverture par rapport à la plaque support fixe 19.

La grille 13 en position de fermeture empêche l'accès d'un utilisateur 29 ou d'un objet non souhaité à l'intérieur de la cuve.

En position de fermeture, l'ouverture angulaire 28 de la grille 13 est tournée vers le corps vertical 3 à l'arrière de l'appareil et s'étend sensiblement sur la largeur de ce corps vertical 3.

Par pivotement sur des moyens de positionnement et de blocage 40, comme cela sera décrit par la suite, la grille 13 peut être amenée en position d'ouverture. En position d'ouverture, l'ouverture angulaire 28 n'est plus tournée vers le corps vertical 3 du bâti 2, l'arbre moteur 9 de l'appareil est à l'arrêt, et l'accès à l'intérieur de la cuve 6 est alors permis. Des outils de mélange 8 peuvent alors être enlevés de l'arbre moteur 9, ou au contraire fixés à l'arbre moteur 9, sans que la cuve 6 ne soit démontée.

Il est également possible d'ajouter des ingrédients au mélange, par exemple en versant le contenu d'un récipient par l'ouverture.

En position de fermeture, un utilisateur 29 peut, grâce à la structure filaire de la grille 13 au travers de la grille 13 des constituants au mélange.

La structure de la grille13 décrite facilite le versement du contenu d'un récipient en s'appuyant sur la première partie inférieure 25 de la grille 13.

Pour certaines applications, la grille 13 doit pouvoir être placée en position d'ouverture, l'arbre moteur 9 entraînant en rotation les outils de mélange 8. Tel est le cas par exemple pour des sirops ou des sucres chauds. Cette opération peut être effectuée en versant le contenu d'un récipient dans la cuve, tout en exerçant une impulsion sur un bouton de commande placé sur le bâti 2 de l'appareil, conformément aux normes de sécurité en vigueur.

La grille 13 peut avoir des formes très différentes adaptées notamment à l'utilisation souhaitée. Par exemple, la grillé 13 ne comprend pas une seconde partie inférieure en forme de bol mais seulement un épaulement à sa base suffisant pour couvrir la cuve.

La grille supporte quatre poignées 31, 32, 33, 34 disposées en position de montage et de fermeture de la manière suivante : une poignée à l'arrière et à gauche 31, une poignée à l'arrière et à droite 32, une poignée à l'avant et à gauche 33, une poignée à l'avant et à droite 34.

Le carter cylindrique 16 peut être réalisé en acier inox, de qualité alimentaire. Il est rotatif et sa surface est lisse ; il n'a pas dans la réalisation représentée un rôle de guidage de la grille lors du montage.

On décrit maintenant le dispositif de fixation de la grille à l'organe support.

La grille 13 est maintenue à l'organe support à grâce à des moyens de positionnement et blocage 40 se présentant sous la forme de galets métalliques d'attache 30.

Ces galets 30 permettent également la rotation de la grille 13 entre la position de fermeture et la position d'ouverture. L'utilisation de galets 30 constitue un net progrès par rapport à l'utilisation de secteurs métalliques qui génèrent des frottements élevés avec la grille, notamment pour des volumes de mélange élevés.

L'appareil étant à l'arrêt, l'arbre moteur 9 étant immobile, la grille 13 peut tourner librement dans les galets 30 par exemple grâce à une intervention manuelle sur la grille 13 pour la faire passer de la position de fermeture à la position d'ouverture.

Lorsque l'appareil est en marche, le moteur 9 entraînant les outils 8 en rotation, la grille 13 est bloquée en rotation comme décrit plus loin.

Dans un premier mode de réalisation, le dispositif de fixation comprend quatre galets 30, deux galets fixes 36, 37 et deux galets mobiles 38, 39.

Les galets 30 sont circonférenciellement régulièrement espacés de 90° dans un cercle coaxial au carter 16 et de diamètre supérieur à celui du carter 16.
0

Les deux galets fixes 36, 37 sont placés du côté arrière de la plaque support 19 : un premier galet arrière 36 du côté gauche, et un second galet arrière 37 du côté droit. Les deux galets mobiles 38, 39 sont placés du côté avant : un troisième galet avant du côté avant 38 gauche et un quatrième galet avant 39 du côté avant droit. Dans la réalisation représentée, les galets 36 et 38 et les galets 37 et 39 sont alignés

Les galets 30 sont des pièces de révolution et comprennent chacun du bas vers le haut, du dessous de la plaque support 19 vers le dessus de la plaque support 19 :
- une première partie extrême 41 présentant une face transversale 41a, une partie tronc de cône 41b s'évasant vers le haut et s'éloignant de l'axe du galet, une partie cylindrique 41c ;
- une deuxième partie extrême 42 définissant une gorge 44, et par la même un chemin de roulement pour la piste intérieure annulaire 67 de la partie annulaire 27 de la grille 13 ; cette seconde partie extrême 42 comprenant une partie tronc de cône 42a s'évasant vers le bas, une partie cylindrique 42b, et une partie tronc de cône 42c s'évasant vers le haut ;
- une troisième partie extrême 43 cylindrique dont le diamètre est sensiblement égal au diamètre de la partie cylindrique 41c ;
- une rondelle de contact 45 de la partie de couplage à la plaque support 19.

Les galets avant mobiles 38, 39 se prolongent chacun verticalement par une partie de liaison comprenant un palier coulissant 46 par exemple en ertalon ® dans un orifice oblong 47 respectivement 48 de la plaque support 19.

Les galets 38, 39 avant sont mobiles en translation par rapport aux orifices oblongs 47, 48, en coopérant avec un support 49 du palier coulissant 46 actionné par un ressort de poussée 50 respectivement 51.

Le palier coulissant 46 s'étend verticalement, le support 49 du palier coulissant 46 et le ressort de poussée 50, 51 s'étendent horizontalement.

Chaque ressort 50, 51 de poussée est monté dans un fourreau respectivement 52, 53 longitudinal respectivement fixé par deux vis 54 de fixation sur une plaque de soutien 55, montée sur la face supérieure 22 de la plaque support 19 et ménageant un espace respectivement pour le déplacement des galets .

Chaque galet arrière fixe 36, 37 est prolongé verticalement par une partie de fixation 56 respectivement 57 fixée sur la plaque support 19 et dont la partie supérieure traverse la plaque de soutien 55 qui présente des orifices 56a et 57a pour le galet 36 et le galet 37 respectivement à cet effet.

On décrit maintenant le dispositif de sécurité 58 de l'appareil associé au galet avant mobile gauche 38, destiné à empêcher la rotation de l'arbre moteur 9 portant les outils 8 lorsque la grille 13 n'est pas correctement positionnée dans la position de montage.

Le dispositif de sécurité comprend :
- deux plots 59, 60 alignés fixés autour d'une tige coaxiale au ressort de rappel et à l'arrière du fourreau qui inclue le ressort de rappel, un plot arrière 59 et un plot avant 60 espacés ménageant une gorge en V 68,
- un boîtier 61 disposé transversalement à l'axe du ressort de rappel 51, tourné vers les deux plots 59, 60, fixé sur la plaque de soutien 55 du côté gauche par deux vis 60, le boîtier 61 présentant un ergot 63 apte à se loger dans la gorge en V 68.

On décrit maintenant le montage de la grille et le fonctionnement du dispositif de sécurité.

Au repos, avant montage de la grille, le galet avant gauche 38 est dans une première position dans l'orifice oblong 47 située dans la partie extrême avant 47b de cet orifice oblong 47.

Dans cette position, l'ergot 63 est en contact avec le plot arrière 59, la sécurité est enclenchée (position R) et l'appareil ne peut démarrer. La grille 13 est en position de sécurité enclenchée.

Lors du montage, l'utilisateur porte la grille 13 par la poignée avant gauche 33 et la poignée avant droite 34. Il emmanche la partie supérieure annualaire 27 de la grille 13 autour du carter en inox 16. Il positionne ensuite la partie supérieure annulaire 27 du côté avant contre les premières parties extrêmes médianes 41 des deux galets avant 38, 39. A cet effet, les deuxièmes parties extrêmes tronconiques 42 des galets avant 38, 39 facilitent le guidage de la grille 13 par l'utilisateur 29.

Le galet avant gauche 38 est déplacé en translation vers l'arrière du fait de la poussée de la grille 13 par l'utilisateur, la partie supérieure annulaire 27 avant étant engagée dans la première partie extrême médiane 42, le ressort de rappel 50 étant comprimé.

Le galet avant gauche 38 est alors dans une deuxième position dans le trou oblong 47, situé dans la partie extrême arrière 47a de l'orifice oblong 47 (position M). L'ergot 63 est en contact avec le plot avant 60, et la sécurité est enclenchée, l'appareil ne pouvant démarrer. La grille 13 est en position de montage sécurité enclenchée

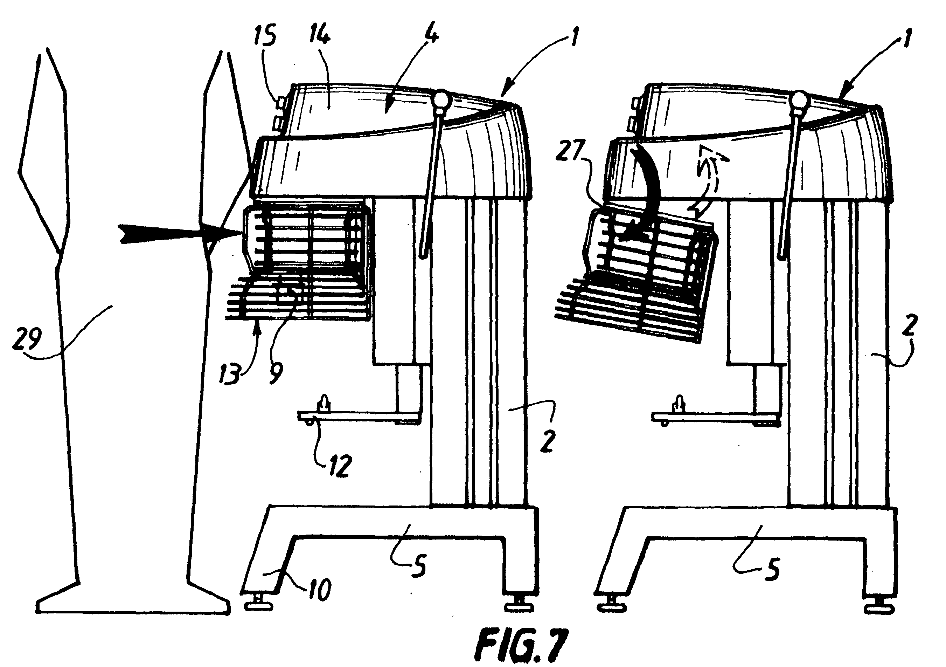

L'utilisateur fait alors pivoter la grille 13 sur les galets avant 38, 39 en faisant remonter la partie annulaire 27 à l'arrière, comme représenté en figure 7 par la flèche en pointillée.

L'utilisateur laisse alors la grille 13 revenir vers l'avant automatiquement du fait de l'action des ressorts de rappel 50, 51, la partie annulaire 27 du côté arrière s'engageant dans les parties extrêmes médianes 41 des deux galets arrière fixes 36, 37.

La grille 13 se trouve alors en position de montage, maintenue par les deux galets arrière 36, 37 et les deux galets avant 38, 39. Dans cette position de montage, le galet avant gauche 38 est situé dans l'orifice oblong 47 dans une position intermédiaire entre les deux parties extrêmes arrière 47a et avant 47b (position F). Dans cette position, l'ergot 63 est positionné dans la gorge en V 68, la sécurité est alors désenclenchée et l'appareil peut démarrer. La grille 13 est en position de fonctionnement, sécurité désenclenchée.

Le dispositif de blocage en rotation 65 de la grille 13 est situé au niveau du galet avant droit 39.

Lors du montage de la grille 13, le galet avant droit 39 se déplace dans l'orifice oblong 48 correspondant. Lorsque le galet avant droit 39 revient automatiquement sous l'effet du ressort de rappel 51 vers la partie extrême avant de l'orifice oblong 48, sa première partie extrême médiane 41 vient se loger dans une encoche de la piste intérieure 67 de la partie annulaire supérieure 27 de la grille 13. La grille 13 est alors bloquée en rotation.

Le réglage des ressorts de rappel 50, 51 des deux galets avant 38, 39 est tel que la grille 13 est toujours contrainte de manière à la maintenir dans les galets fixes 36, 37 et les galets mobiles 38, 39 en position de travail.

Pour démonter la grille, l'utilisateur 29 pousse la grille 13 par les poignées avant 33, 34. Le galet avant gauche 38 passe de la position de fonctionnement sécurité désenclenchée à la position de démontage sécurité enclenchée. Les galets arrière fixes 36, 37 se trouvent alors dégagés de la partie annulaire 27 à l'arrière. L'utilisateur fait alors pivoter la grille 13 sur les galets avant 38, 39 pour la dégager complètement, le galet avant gauche 38 revenant en position de repos sécurité enclenchée, comme indiqué en figure 7 par la flèche en trait plein vers le bas.

Dans un second mode de réalisation, non représenté, les galets 30 sont placés par rapport à la grille 13 de manière à coopérer avec une piste extérieure arrondie de la partie annulaire de la grille, et non avec la piste intérieure.

Dans un troisième mode de réalisation non représenté, les galets avant 38, 39 sont mobiles en translation dans les trous oblongs entre deux positions au lieu de trois positions : position de repos identique à la position de montage, à la partie extrême avant de l'orifice oblong, et une position écartée lors de la sollicitation du galet mobile par la partie annulaire, située à la partie extrême arrière de l'orifice oblong.

Dans un quatrième mode de réalisation, les galets fixes sont situés à l'avant et les galets mobiles sont situés à l'arrière, à l'inverse du premier mode de réalisation décrit.

Le procédé de montage de la grille comprend dans ce quatrième mode de réalisation les étapes de :
- présentation de la grille à l'aide des poignées sous l'organe support ;
- positionnement puis engagement de la partie supérieure annulaire de la grille dans les galets mobiles d'attache du côté arrière, en déplaçant la grille de l'arrière vers l'avant ;
- pivotement de la grille sur les galets arrière du bas vers le haut et accompagnement de la grille dont la partie annulaire s'enclenche également dans les galets fixes avant jusqu'au maintien de la grille en position.

Le procédé de démontage de la grille comprend dans ce quatrième mode les étapes de :
- déplacement de la grille par une traction sur les galets arrière mobiles de l'arrière vers l'avant, de manière à dégager la partie annulaire des galets fixes avant ;
- pivotement de la grille sur les galets mobiles arrière vers le bas et l'arrière, et poussée de la grille de l'avant vers l'arrière pour la dégager complètement.

Selon un autre mode de réalisation non représenté, les galets sont portés par une plaque support elle-même montée sur l'organe support, ce qui permet l'utilisation du dispositif de fixation à galets décrit sur des machines présentant jusqu'à présent des dispositifs de support de la grille moins performants.

D'autres modes de réalisation sont envisageables tout en restant dans le cadre de l'invention. Par exemple chaque galet mobile peut comprendre un dispositif de sécurité, ou le montage de la grille peut se faire par le côté pour diminuer l'encombrement lié à la machine.

## Revendications

1. Dispositif de fixation d'une grille de protection amovible (13) pour une appareil tel qu'un batteur ou un mélangeur (1), la grille (13) étant suspendue en position de montage par sa partie extrême supérieure (27) à un organe support (18) fixe associé au bâti de l'appareil et situé au dessus de la cuve, l'organe support (18) comprenant des moyens de positionnement et de blocage (40) en au moins trois points de la partie extrême supérieure (27) de la grille à l'organe support (18), **caractérisé en ce que** les moyens de positionnement et de blocage se présentent sous la forme de galets (30) faisant saillie de l'organe support (18), et **en ce qu'**en au moins un point de la partie extrême supérieure (27) les moyens de positionnement et de blocage sont aptes à coopérer, dans une position de maintien de la grille (13) à l'organe support, avec des moyens de rappel montés sur l'organe support, de manière à pouvoir monter et démonter la grille sans altérer les galets, et à autoriser en position de maintien la rotation de la grille au dessus de la cuve

2. Dispositif de fixation selon la revendication 1 **caractérisé en ce que** l'organe support est incorporé dans le bâti (2) ou monté sur le bâti.

3. Dispositif de fixation selon la revendication 1 ou 2 **caractérisé en ce que** la partie extrême supérieure (27) de la grille (13) est de forme annulaire.

4. Dispositif de fixation selon la revendication 3 **caractérisé en ce que** les galets (30) guident en rotation la grille (13) par rapport à l'organe support fixe (18) entre une position de fermeture et une position d'ouverture respectivement interdisant et autorisant l'accès à l'intérieur de la cuve (6).

5. Dispositif de fixation selon la revendication 1 ou 2 **caractérisé en ce que** la partie extrême supérieure (27) de la grille (13) forme un cadre parallélipipédique.

6. Dispositif de fixation selon l'une quelconque des revendications 1 à 5 caractérisé en ce les galets (30) et la partie extrême supérieure (27) de la grille restent solidaires respectivement de l'organe support (18) et de la grille (13) lors du montage et du démontage de la grille.

7. Dispositif de fixation selon l'une quelconque des revendications 1 à 6 **caractérisé en ce que** les galets (30) sont d'une part deux galets fixes (36, 37) par rapport à l'organe support (18) et d'autre part au moins un galet mobile (38, 39) par rapport à l'organe support, le déplacement du ou des galets mobiles (38, 39) permettant l'engagement de la partie extrême supérieure (27) de la grille (13) avec les galets fixes (36, 37) et le ou les galets mobiles (38, 39) jusqu'à une position de maintien de la grille par les galets fixes (36, 37) et mobiles (38, 39).

8. Dispositif de fixation selon la revendication 7, **caractérisé en ce que** les galets (30) sont supportés par l'organe support, et régulièrement espacés circonférentiellement

9. Dispositif de fixation selon l'une quelconque des revendications 7 ou 8, **caractérisé en ce que** les galets fixes (36, 37) ou mobiles (38, 39) sont régulièrement espacés circonférentiellement de 90° dans le cas de deux galets mobiles (38, 39).

10. Dispositif de fixation selon l'une quelconque des revendications 7 ou 8, **caractérisé en ce que** les galets fixes (36, 37) ou mobiles (38, 39) sont régulièrement espacés circonférentiellement de 120° dans le cas d'un galet mobile (38, 39).

11. Dispositif de fixation selon l'une quelconque des revendications 7 à 10, **caractérisé en ce que** chaque galet mobile (38, 39) est mobile entre une position écartée de la partie extrême supérieure (27) de la grille (13), correspondant à la sollicitation du galet mobile (38, 39) par la partie extrême supérieure (27) de la grille (13) lors du montage, et une position engagée dans laquelle la grille (13) est montée sur et contrainte par les galets fixes (36, 37) et le ou les galets mobiles (38, 39).

12. Dispositif de fixation selon l'une quelconque des revendications 7 à 11, **caractérisé en ce que** chaque galet mobile (38, 39) est mobile en translation, se déplaçant dans un orifice oblong (47, 48) de l'organe support (10) aligné avec le galet mobile (38, 39).

13. Dispositif de sécurité selon l'une quelconque des revendications 7 à 11, **caractérisé en ce que** les galets mobiles (38, 39) sont mobiles en rotation, selon un angle compris sensiblement entre 0 et 45°par rapport à la verticale

14. Dispositif de fixation selon l'une quelconque des revendications 7 à 13, **caractérisé en ce que** chaque galet comprend une deuxième partie extrême (42) définissant une gorge (44) pour la piste intérieure de la partie extrême supérieure (27) de la grille venant en contact avec ledit galet lors du montage de la grille.

15. Dispositif de fixation selon la revendication 14, **caractérisé en ce que** les galets (30) comprennent au-dessous de la deuxième partie extrême (42) une première partie extrême (41) de plus fort encombrement transversal que la deuxième partie extrême (42) attenante, et au-dessus de la deuxième partie extrême (42) une troisième partie extrême (43) de plus fort encombrement transversal que la deuxième partie médiane attenante (42).

16. Dispositif de fixation selon la revendication 15, **caractérisé en ce que** la première partie extrême (41) a une forme générale conique ou tronconique dont la grande base est vers la deuxième partie axiale (42) et la petite base ou la pointe est vers l'extrémité libre des galets (30), de façon à faciliter le guidage de la partie extrême supérieure (27) de la grille (13) vers la deuxième partie extrême (42) des galets (30) lors du montage de la grille.

17. Dispositif de fixation selon l'une quelconque des revendications 7 à 16, **caractérisé en ce que** l'organe support (18) est une plaque (19) horizontale, traversée par l'arbre moteur (9) vertical du mélangeur batteur, présentant une surface inférieure (21) tournée vers la cuve (6), une surface supérieure (22) tournée du côté opposé, un côté arrière tourné vers la partie fixe verticale du bâti (22) et un côté avant tourné du côté opposé.

18. Dispositif de fixation selon l'une quelconque des revendications 7 à 17, **caractérisé en ce que** l'organe support (18) présente pour chaque galet mobile (38, 39) des moyens de rappel (50, 51) du galet mobile incorporés dans un fourreau (52, 53) fixé à la face supérieure (22) de l'organe support, permettant au galet mobile (38) de revenir en position de repos ou en position intermédiaire après en avoir été écarté lors de l'engagement ou du dégagement de la partie extrême supérieure (27) avec le galet mobile (38).

19. Dispositif de fixation selon la revendication 18, **caractérisé en ce que** les moyens de rappel de chaque galet mobile sont sous la forme d'un ressort (50, 51) de rappel guidé en translation pour chaque galet mobile (38, 39), le ressort étant relié à un support (49) du palier horizontal coulissant (46) prolongeant verticalement les galets mobiles (38, 39).

20. Dispositif de fixation selon la revendication 18, **caractérisé en ce que** les moyens de rappel de chaque galet mobile sont sous la forme d'un ressort de rappel guidé en translation commun aux deux galets mobiles (38, 39) dans un seul orifice oblong, les deux galets mobiles étant reliés par une barre reliée au ressort de rappel.

21. Dispositif de fixation selon la revendication 18, **caractérisé en ce que** les moyens de rappel de chaque galet mobile sont un vérin de rappel.

22. Dispositif de fixation selon l'une quelconque des revendications 7 à 21, **caractérisé en ce que** les galets fixes (36, 37) et mobiles (38, 39) viennent en contact avec la piste intérieure (67) de la partie extrême (27) supérieure.

23. Dispositif de fixation selon l'une quelconque des revendications 7 à 21, **caractérisé en ce que** les galets viennent en contact avec la piste extérieure de la partie supérieure annulaire.

24. Dispositif de fixation selon l'une quelconque des revendications 7 à 23, **caractérisé en ce qu'**il comprend un dispositif de sécurité (58) comportant des moyens de sécurité, le galet mobile (38) étant mobile dans l'orifice oblong (47) d'une position de repos sécurité enclenchée, à une position de montage sécurité enclenchée, puis à une position intermédiaire de fonctionnement sécurité désenclenchée.

25. Dispositif de fixation selon la revendication 24, **caractérisé en ce que** le dispositif de sécurité (58) comprend deux plots (59, 60) ménageant une gorge (68) et un boîtier (61) supportant un ergot (63) positionné dans la gorge (68) en position intermédiaire de fonctionnement sécurité désenclenchée.

26. Dispositif de fixation selon l'une quelconque des revendications 7 à 25, **caractérisé en ce que** les galets fixes (36, 37) sont placés du côté arrière de l'organe support et le ou les galets mobiles (38, 39) sont placés du côté avant de l'organe support (18).

27. Dispositif de fixation selon l'une quelconque des revendications 7 à 25, **caractérisé en ce que** les galets fixes (36, 37) sont placés du côté avant de l'organe support (18) et le ou les galets mobiles (38, 39) sont placés du côté arrière de l'organe support (18).

28. Dispositif de fixation selon l'une quelconque des revendications 1 à 26, **caractérisé en ce que** la grille (13) comprend une partie de protection filaire s'étendant sur 200 à 300° et typiquement 270°, et une partie formant ouverture orientée vers l'arrière en position normale de fonctionnement.

29. Dispositif de fixation selon la revendication 28, **caractérisé en ce que** la grille (13) comprend deux poignées situées du côté avant et placées à proximité du ou des galets mobiles (38, 39) lors du montage et du démontage de la grille, de façon à permettre simultanément le déplacement du ou des galets mobiles (38, 39) dégageant le ou les galets mobiles de la partie extrême supérieure et le positionnement de la grille pour le montage et le démontage.

30. Dispositif de fixation selon la revendication 28 ou 29, **caractérisé en ce que** la partie de protection comporte d'une seule pièce une première portion inférieure (25) en forme de bol renversé et une seconde partie supérieure sensiblement cylindrique (26).

31. Appareil comprenant un bâti (2) comportant un organe support (18), une grille (13), un dispositif de fixation selon l'une des revendications précédentes, une cuve de mélange (6) reliée par ses bords latéraux au bâti (2) par un organe de maintien (12), un arbre moteur (9) entraînant en rotation des outils (8) de battage ou de mélange entouré d'un carter (16), la seconde portion supérieure de la partie de protection de la grille étant emmanchée autour du carter, la première portion inférieure de la partie de protection s'étendant sensiblement jusqu'au bord supérieur de la cuve (6).

32. Procédé de montage d'une grille à l'organe support d'un appareil tel qu'un batteur ou un mélangeur, la grille étant fixée à l'aide du dispositif de fixation selon la revendication 26 comprenant les étapes de :
- présentation de la grille à l'aide des poignées sous l'organe support ;
- positionnement puis engagement de la partie supérieure annulaire de la grille dans les galets d'attache mobiles du côté avant, en déplaçant la grille de l'avant vers l'arrière de manière à écarter les galets mobiles de la position de repos ;
- pivotement de la grille sur les galets avant du bas vers le haut en accompagnant la grille, dont la partie annulaire s'enclenche alors également dans les galets arrière, jusqu'au maintien de la grille en position.

33. Procédé de démontage d'une grille (13) montée selon le procédé de montage selon la revendication 32 comprenant les étapes de :
- déplacement de la grille en l'appuyant sur les galets avant, de manière à dégager la partie annulaire des galets arrière ;
- pivotement de la grille sur les galets avant vers le bas et l'avant, et traction de la grille de l'arrière vers l'avant pour la dégager complètement.

## Patentansprüche

1. Befestigungsvorrichtung eines abnehmbaren Schutzgitters (13) für ein Gerät, wie zum Beispiel eine Rührmaschine oder einen Mischer (1), wobei das Gitter (13) in Montageposition durch seinen oberen Endteil (27) an einem dem Tragelement des Geräts zugeordneten und sich oberhalb des Behälters befindenden festen Trägerorgan (18) aufgehängt ist, wobei das Trägerorjan (18) Positionierungs- und Blockierungsmittel (40) an wenigstens drei Punkten des oberen Endteils (27) des Gitters des Trägerorgans (18) umfasst, **dadurch gekennzeichnet, dass** die Positionierungs- und Blockierungsmittel sich in Form von aus dem Trägerorgan (18) hervorstehenden Rollen (30) darstellen und dass wenigstens ein Punkt des oberen Endteils (27), die Positionierungs- und Blockierungsmittel geeignet sind, in einer Halteposition des Gitters (13) am Trägerorgan mit auf dem Trägerorgan angebrachten Rückstellmitteln derart zusammenzuwirken, dass das Gitter ohne Änderung der Rollen angebracht und abgenommen werden kann und die Rotation des Gitters oberhalb des Behälters in Halteposition zugelassen werden kann.

2. Befestigungsvorrichtung gemäß Anspruch 1, **dadurch gekennzeichnet, dass** das Trägerorgan im Tragelement (2) integriert oder auf dem Tragelement montiert ist.

3. Befestigungsvorrichtung gemäß Anspruch 1 oder 2, **dadurch gekennzeichnet, dass** der obere Endteil (27) des Gitters (13) eine Ringform aufweist.

4. Befestigungsvorrichtung gemäß Anspruch 3, **dadurch gekennzeichnet, dass** die Rollen (30) das Gitter (13) in Rotation im Verhältnis zum festen Trägerorgan (18) jeweils zwischen einer den Zugang zum Innern des Behälters (6) verhindernden Schließposition und einer den Zugang zum Innern des Behälters (6) zulassenden Öffnungsposition führen.

5. Befestigungsvorrichtung gemäß Anspruch 1 oder 2, **dadurch gekennzeichnet, dass** der obere Endteil (27) des Gitters (13) einen parallelflachen Rahmen bildet.

6. Befestigungsvorrichtung gemäß Anspruch 1 bis 5, **dadurch gekennzeichnet, dass** die Rollen (30) und der obere Endteil (27) des Gitters beim Anbringen und beim Abnehmen des Gitters jeweils mit dem Trägerorgan (18) und dem Gitter (13) fest verbunden bleiben.

7. Befestigungsvorrichtung gemäß Anspruch 1 bis 6, **dadurch gekennzeichnet, dass** die Rollen (30) einerseits zwei im Verhältnis zum Trägerorgan (18) feste Rollen (36, 37) und andererseits wenigstens eine im Verhältnis zum Trägerorgan mobile Rolle (38, 39) sind, wobei die Verschiebung der mobilen Rolle oder Rollen (38, 39) das Einführen des oberen Endteils (27) des Gitters (13) mit den festen Rollen (36, 37) und der mobilen Rolle oder Rollen (38, 39) bis zu einer Halteposition des Gitters durch die festen (36, 37) und mobilen (38, 39) Rollen erlaubt.

8. Befestigungsvorrichtung gemäß Anspruch 7, **dadurch gekennzeichnet, dass** die Rollen (30) vom Trägerorgan gehalten werden und am Umfang regelmäßig beabstandet sind.

9. Befestigungsvorrichtung gemäß Anspruch 7 oder 8, **dadurch gekennzeichnet, dass** die festen (36, 37) oder mobilen (38, 39) Rollen im Fall von zwei mobilen (38, 39) Rollen am Umfang regelmäßig um 90° beabstandet sind.

10. Befestigungsvorrichtung gemäß Anspruch 7 oder 8, **dadurch gekennzeichnet, dass** die festen (36, 37) oder mobilen (38, 39) Rollen im Fall einer mobilen Rolle (38, 39) am Umfang regelmäßig um 120° beabstandet sind.

11. Befestigungsvorrichtung gemäß Anspruch 7 bis 10, **dadurch gekennzeichnet, dass** jede mobile (38, 39) Rolle zwischen einer vom oberen Endteil (27) des Gitters (13) entfernten, was dem Ansprechen der mobilen (38, 39) Rolle durch den oberen Endteil (27) des Gitters (13) beim Anbringen entspricht, und einer eingeführten Position, in der das Gitter (13) auf und von den festen (36, 27) Rollen und der oder den mobilen (38, 39) Rolle oder Rollen beansprucht eingeführten Position mobil ist.

12. Befestigungsvorrichtung gemäß Anspruch 7 bis 11, **dadurch gekennzeichnet, dass** jede mobile (38, 39) Rolle in Translation mobil ist, wobei sie sich in einer länglichen Öffnung (47, 48) des fluchtgerade mit der mobilen (38, 39) Rolle ausgerichteten Trägerorgans (10) verschiebt.

13. Befestigungsvorrichtung gemäß Anspruch 7 bis 11, **dadurch gekennzeichnet, dass** die mobilen (38, 39) Rollen gemäß eines deutlich zwischen 0 und 45° im Verhältnis zur Vertikalen inbegriffenen Winkels in Rotation mobil sind.

14. Befestigungsvorrichtung gemäß Anspruch 7 bis 13, **dadurch gekennzeichnet, dass** jede Rolle einen eine Auskehlung (44) für die innere Piste des oberen Endteils (27)des beim Anbringen des Gitters mit der besagten Rolle in Kontakt kommenden Gitters definierende zweiten Endteil (42) umfasst.

15. Befestigungsvorrichtung gemäß Anspruch 14, **dadurch gekennzeichnet, dass** die Rollen (30) oberhalb des zweiten Endteils (42) einen ersten Endteil (41) mit größerem transversalem Platzverbrauch als der anliegende zweite Endteil (42) und oberhalb des zweiten Endteils (42) einen dritten Endteil (43) mit größerem transversalem Platzverbrauch als dem anliegenden zweiten medianen Endteil (42) umfassen.

16. Befestigungsvorrichtung gemäß Anspruch 15, **dadurch gekennzeichnet, dass** der erste Endteil (41) eine allgemein konische oder kegelstumpfartige Form hat, dessen große Basis zum zweiten axialen (42) Teil ausgerichtet ist und dessen kleine Basis oder Spitze zum freien Ende der Rollen (30) derart ausgerichtet ist, dass beim Anbringen des Gitters die Führung des oberen Endteils (27) des Gitters (13) zum zweiten Endteil (42) der Rollen (30) erleichtert wird.

17. Befestigungsvorrichtung gemäß Anspruch 7 bis 16, **dadurch gekennzeichnet, dass** das Trägerorgan (18) eine von der vertikalen Motorwelle (9) der Rühr-Mischmaschine durchquerte horizontale Platte (19) ist, die eine zum Behälter (6) ausgerichtete untere Fläche (21), eine zur gegenüberliegenden Seite ausgerichtete obere Fläche (22), eine zum festen vertikalen Teil des Tragelements (22) ausgerichtete Hinterseite und eine auf der gegenüberliegenden Seite ausgerichtete Vorderseite aufweist.

18. Befestigungsvorrichtung gemäß Anspruch 7 bis 17, **dadurch gekennzeichnet, dass** das Trägerorgan (18) für jede mobile (38, 39) Rolle in einer an der Oberseite (22) des Trägerorgans befestigte Stulpe (52, 53) integrierte Rückholmittel (50, 51) der mobilen Rolle aufweist, was der mobilen Rolle (38) nach ihrem Abspreizen beim Einführen oder Freisetzen des oberen Endteils (27) mit der mobilen (38) Rolle das Zurückkehren in die Ruheposition oder in die intermediäre Position erlaubt.

19. Befestigungsvorrichtung gemäß Anspruch 18, **dadurch gekennzeichnet, dass** die Rückholmittel jeder mobilen Rolle die Form einer in Translation für jede mobile (38, 39) Rolle geführte Rückholfeder (50, 51) aufweisen, wobei die Feder mit einem Träger (49) des die mobilen (38, 39) Rollen vertikal verlängernden horizontalen Gleitlagers (46) verbunden ist.

20. Befestigungsvorrichtung gemäß Anspruch 18, **dadurch gekennzeichnet, dass** die Rückholmittel jeder mobilen Rolle die Form einer in Translation gemeinsam mit den beiden mobilen (38, 39) Rollen in einer einzigen länglichen Öffnung geführten Rückholfeder aufweisen, wobei die mobilen Rollen durch eine mit der Rückholfeder verbundene Stange verbunden sind.

21. Befestigungsvorrichtung gemäß Anspruch 18, **dadurch gekennzeichnet, dass** die Rückholmittel jeder mobilen Rolle ein Rückholzylinder sind.

22. Befestigungsvorrichtung gemäß Anspruch 7 bis 21, **dadurch gekennzeichnet, dass** die festen (36, 37) und mobilen (38, 39) Rollen mit der inneren Piste (67) des oberen Endteils (27) in Kontakt kommen.

23. Befestigungsvorrichtung gemäß Anspruch 7 bis 21, **dadurch gekennzeichnet, dass** die Rollen mit der äußeren Piste des oberen Ringteils in Kontakt kommen.

24. Befestigungsvorrichtung gemäß Anspruch 7 bis 23, **dadurch gekennzeichnet, dass** sie eine Sicherheitsvorrichtung (58) mit Sicherheitsmitteln in einer eingerasteten Sicherheits-Montageposition und anschließend in einer intermediären freigesetzten Sicherheits-Betriebsfunktion umfasst, wobei die mobile (38) Rollen mobil in der länglichen Öffnung (47) einer eingerasteten Sicherheits-Ruheposition ist.

25. Befestigungsvorrichtung gemäß Anspruch 24, **dadurch gekennzeichnet, dass** die Sicherheitsvorrichtung (58) zwei eine Auskehlung (68) und ein in der Auskehlung (68) in intermediärer Sicherheits-Betriebsfunktion freigesetztes positioniertes Gehäuse (61) vorsehende Klötze (58) umfasst.

26. Befestigungsvorrichtung gemäß Anspruch 7 bis 25, **dadurch gekennzeichnet, dass** die festen (36, 37) Rollen auf der Rückseite des Trägerorgans angeordnet werden und die mobile Rolle oder mobilen Rollen (38, 39) auf der Vorderseite des Trägerorgans (18) angeordnet werden.

27. Befestigungsvorrichtung gemäß Anspruch 7 bis 25, **dadurch gekennzeichnet, dass** die festen (36, 37) Rollen auf der Vorderseite des Trägerorgans (18) und die mobile Rolle oder mobilen Rollen (38, 39) auf der Rückseite des Trägerorgans (18) angeordnet werden.

28. Befestigungsvorrichtung gemäß Anspruch 1 bis 26, **dadurch gekennzeichnet, dass** das Gitter (13) einen sich auf 200 bis 300° und typischerweise 270° erstreckenden Drahtschutzteil und einen eine in der normalen Betriebsfunktion nach hinten ausgerichtete Öffnung bildenden Teil umfasst.

29. Befestigungsvorrichtung gemäß Anspruch 28, **dadurch gekennzeichnet, dass** das Gitter (13) zwei sich auf der Vorderseite befindende und beim Anbringen oder Abnehmen des Gitters in der Nähe der mobilen Rolle oder der mobilen Rollen (38, 39) angeordnete Griffe umfasst, so dass die gleichzeitige Verschiebung der die mobile Rolle oder die mobilen Rollen des oberen Endteils freisetzenden mobilen Rolle oder der mobilen Rollen (38, 39) und die Positionierung des Gitters für das Anbringen oder Abnehmen erlaubt wird.

30. Befestigungsvorrichtung gemäß Anspruch 28 oder 29, **dadurch gekennzeichnet, dass** der Schutzteil einen aus einem einzigen Stück bestehenden ersten unteren Abschnitt (25) in Form einer umgekehrten Schale und einen zweiten oberen, deutlich zylindrischen (26) Teil umfasst.

31. Gerät mit einem Tragelement (2) mit einem Trägerorgan (18), einem Gitter (13), einer Befestigungsvorrichtung gemäß einem der vorherigen Ansprüche, einem an seinen Seitenrändern mit dem Tragelement (2) durch ein Halteorgan (12) verbundenen Mischbehälter (6), eine Rührmaschinen- oder Mischer-Werkzeuge (8) in Rotation antreibende, von einem Kasten (16) umgebene Motorwelle (9), wobei der zweite obere Abschnitt des Schutzteils des Gitters um den Kasten angeschaftet ist, wobei sich der untere erste Abschnitt des Schutzteils deutlich bis zum oberen Rand des Behälters (6) erstreckt.

32. Aufbauverfahren eines Gitters eines Geräts, wie zum Beispiel einer Rührmaschine oder eines Mischers, auf dem Trägerorgan, wobei das Gitter mithilfe der Befestigungsvorrichtung gemäß Anspruch 26 befestigt wird, umfassend die folgenden Stufen:
- Untersetzen des Gitters mithilfe der Griffe unter das Trägerorgan;
- Positionierung und anschließend Einführen des oberen Ringteils des Gitters in die mobilen Befestigungsrollen der Vorderseite durch Verschieben des Gitters von vorn nach hinten, so dass die mobilen Rollen der Ruheposition auseinander gespreizt werden;
- Drehen des Gitters auf den vorderen Rollen von unten nach oben unter Begleitung des Gitters, dessen Ringteil dann ebenfalls in die hinteren Rollen bis zum Festhalten des Gitters in der Position eingeführt wir.

33. Abnahmeverfahren eines gemäß des Aufbauverfahrens gemäß Anspruch 32 montierten Gitters (13), umfassend die folgenden Stufen:
- Verschieben des Gitters durch Aufstützen auf den vorderen Rollen, so dass der Ringteil der hinteren Rollen freigesetzt wird;
- Drehen des Gitters auf den vorderen Rollen nach unten und nach vorn, und Zug des Gitters von hinten nach vorn zu seinem vollständigen Freisetzen.

## Claims

1. A device for fixing a removable protective grid (13) for an apparatus such as a beater or mixer (1), the grid (13) being suspended in the mounted position by its top end part (27) on a fixed support member (18) associated with the structure of the apparatus and situated above the vessel, the support member (18) comprising means (40) of positioning and locking the top end part (27) of the grid on the support member (18) at at least three points, **characterised in that** the positioning and locking means are in the form of rollers (30) projecting from the support member (18), and **in that**, at at least one point on the top end part (27), the positioning and locking means are able to cooperate, in a position of holding the grid (13) on the support member, with return means mounted on the support member, so as to be able to mount and remove the grid without altering the rollers, and, in the holding position, to allow the rotation of the grid above the vessel.

2. A fixing device according to Claim 1, **characterised in that** the support member is incorporated in the structure (2) or mounted on the structure.

3. A fixing device according to Claim 1 or 2, **characterised in that** the top end part (27) of the grid (13) is annular in shape.

4. A fixing device according to Claim 3, **characterised in that** the rollers (30) guide the grid (13) in rotation with respect to the fixed support member (18) between a closed position and an open position respectively preventing and allowing access to the inside of the vessel (6).

5. A fixing device according to Claim 1 or 2, **characterised in that** the top end part (27) of the grid (13) forms a parallelepipedal frame.

6. A fixing device according to any one of Claims 1 to 5, **characterised in that** the rollers (30) and the top end part (27) of the grid remain fixed respectively to the support member (18) and the grid (13) during the mounting and removal of the grid.

7. A fixing device according to any one of Claims 1 to 6, **characterised in that** the rollers (30) are firstly two rollers (36, 37) fixed with respect to the support member (18) and secondly at least one roller (38, 39) able to move with respect to the support member, the movement of the movable roller or rollers (38, 39) allowing the engagement of the top end part (27) of the grid (13) with the fixed rollers (36, 37) and the movable roller or rollers (38, 39) as far as a position of holding the grid by the fixed (36, 37) and movable (38, 39) rollers.

8. A fixing device according to Claim 7, **characterised in that** the rollers (30) are supported by the support member and regularly spaced apart circumferentially.

9. A fixing device according to either one of Claims 7 or 8, **characterised in that** the fixed (36, 37) or movable (38, 39) rollers are regularly spaced apart circumferentially by 90° in the case of two movable rollers (38, 39).

10. A fixing device according to either one of Claims 7 or 8, **characterised in that** the fixed (36, 37) or movable (38, 39) rollers are regularly spaced apart circumferentially by 120° in the case of one movable roller (38, 39).

11. A fixing device according to any one of Claims 7 to 10, **characterised in that** each movable roller (38, 39) is able to move between a position away from the top end part (27) of the grid (13), corresponding to the movable roller (38, 39) being acted on by the top end part (27) of the grid (13) at the time of mounting, and an engaged position in which the grid (13) is mounted on and constrained by the fixed rollers (36, 37) and the movable roller or rollers (38, 39).

12. A fixing device according to any one of Claims 7 to 11, **characterised in that** each movable roller (38, 39) is able to move in translation, moving in an oblong orifice (47, 48) in the support member (10) aligned with the movable roller (38, 39).

13. A fixing device according to any one of Claims 7 to 11, **characterised in that** the movable rollers (38, 39) are able to move in rotation, at an angle lying substantially between 0° and 45° with respect to the vertical.

14. A fixing device according to any one of Claims 7 to 13, **characterised in that** each roller comprises a second end part (42) defining a groove (44) for the internal track of the top end part (27) of the grid coming into contact with the said roller when the grid is mounted.

15. A fixing device according to Claim 14, **characterised in that** the rollers (30) comprise, below the second end part (42), a first end part (41) with a greater transverse dimension than the adjoining second end part (42), and above the second end part (42) a third end part (43) with a greater transverse dimension than the adjoining second middle part (42).

16. A fixing device according to Claim 15, **characterised in that** the first end part (41) has a conical or frustoconical shape overall, the large base of which is towards the second axial part (42) and the small base or apex of which is towards the free end part of the rollers (30), so as to facilitate the guidance of the top end part (27) of the grid (13) towards the second end part (42) of the rollers (30) when the grid is mounted.

17. A fixing device according to any one of Claims 7 to 16, **characterised in that** the support member (18) is a horizontal plate (19), through which the vertical drive shaft (9) of the beater mixer passes, having a bottom surface (21) turned towards the vessel (6), and a top surface (22) turned on the opposite side, a rear side turned towards the vertical fixed part of the structure (22) and a front side turned in the opposite direction.

18. A fixing device according to any one of Claims 7 to 17, **characterised in that** the support member (18) has, for each movable roller (38, 39), return means (50, 51) for the movable roller incorporated in a sleeve (52, 53) fixed to the top face (22) of the support member, enabling the movable roller (38) to return to the idle position or to the intermediate position after having been moved away from it when the top end part (27) engaged or disengaged with the movable roller (38).

19. A fixing device according to Claim 18, **characterised in that** the return means for each movable roller are in the form of a return spring (50, 51) guided in translation for each movable roller (38, 39), the spring being connected to a support (49) for the sliding horizontal bearing (46) vertically extending the movable rollers (38, 39).

20. A fixing device according to Claim 18, **characterised in that** the return means for each movable roller are in the form of a return spring guided in translation common to the two movable rollers (38, 39) in a single oblong orifice, the two movable rollers being connected by a bar connected to the return spring.

21. A fixing device according to Claim 18, **characterised in that** the return means for each movable roller are a return cylinder.

22. A fixing device according to any one of Claims 7 to 21, **characterised in that** the fixed (36, 37) and movable (38, 39) rollers come into contact with the internal track (67) of the top end part (27).

23. A fixing device according to any one of Claims 7 to 21, **characterised in that** the rollers come into contact with the external track of the annular top part.

24. A fixing device according to any one of Claims 7 to 23, **characterised in that** it comprises a safety device (58) comprising safety means, the movable roller (38) being able to move in the oblong orifice (47) from an engaged safety idle position, to an engaged safety mounting position, and then to a disengaged safety intermediate operating position.

25. A fixing device according to Claim 24, **characterised in that** the safety device (58) comprises two studs (59, 60) forming a groove (68) and a housing (61) supporting a lug (63) positioned in the groove (68) in the disengaged intermediate safety operating position.

26. A fixing device according to any one of Claims 7 to 25, **characterised in that** the fixed rollers (36, 37) are placed on the rear side of the support member and the movable roller or rollers (38, 39) are placed on the front side of the support member (18).

27. A fixing device according to any one of Claims 7 to 25, **characterised in that** the fixed rollers (36, 37) are placed on the front side of the support member (18) and the movable roller or rollers (38, 39) are placed on the rear side of the support member (18).

28. A fixing device according to any one of Claims 1 to 26, **characterised in that** the grid (13) comprises a wire protective part extending over 200° to 300° and typically 270°, and a part forming an opening oriented towards the rear in the normal operating position.

29. A fixing device according to Claim 28, **characterised in that** the grid (13) comprises two handles situated on the front side and placed close to the movable roller or rollers (38, 39) when the grid is mounted and removed, so as to allow simultaneously the movement of the movable roller or rollers (38, 39) releasing the movable roller or rollers from the top end part and the positioning of the grid for mounting and removal.

30. A fixing device according to Claim 28 or 29, **characterised in that** the protective part comprises in a single piece a first bottom portion (25) in the form of an inverted bowl and a substantially cylindrical second top part (26).

31. An apparatus comprising a structure (2) comprising a support member (18), a grid (13), a fixing device according to one of the preceding claims, a mixing vessel (6) connected by its side edges to the structure (2) by a holding member (12), a drive shaft (9) driving in rotation beating or mixing tools (8) surrounded by a casing (16), the second top portion of the protective part of the grid being fitted around the casing, the first bottom portion of the protective part extending substantially as far as the top edge of the vessel (6).

32. A method for mounting a grid on the support member of an apparatus such as a beater or a mixer, the grid being fixed by means of the fixing device according to Claim 26, comprising the steps of:
- offering up the grid by means of the handles under the support member,
- positioning and then engaging the annular top part of the grid in the movable fastening rollers on the front side, moving the grid from front to rear so as to move the movable rollers away from the idle position;
- pivoting the grid on the front rollers from bottom to top whilst accompanying the grid, whose annular part then also engages in the rear rollers, until the grid is held in position.

33. A method for removing a grid (13) mounted according to the mounting method according to Claim 32, comprising the steps of:
- moving the grid by pressing on the front rollers, so as to disengage the annular part from the rear rollers;
- pivoting the grid on the front rollers towards the bottom and front, and pulling the grid from rear to front in order to disengage it completely.
